# EUROPEAN PATENT APPLICATION

(11) **EP 4 737 212 A1**
(43) Date of publication of application: **06.05.2026**
(21) Application number: 25211833.6
(22) Date of filing: 28.10.2025
(51) Int. Cl.: B60P 3/14, B60P 7/13, B60P 7/06

(54) **SUPPORTING STRUCTURE OF ROAD MAINTENANCE EQUIPMENT COUPLEABLE TO THE FRAME OF A VEHICLE HAVING A LOADING PLATFORM**

(30) Priority: 31.10.2024 IT 202400024456
(71) Applicant: Hymach S.r.l., 45039 Stienta (Rovigo) (IT)
(72) Inventor: RICCI, GIACINTO, 45039 STIENTA (RO) (IT); RICCI, MONICA, 45039 STIENTA (RO) (IT)
(74) Representative: Dall'Olio, Christian

(57) **Abstract**

A supporting structure (1) of road maintenance equipment coupleable to the frame (2) of a vehicle having a loading platform is disclosed, wherein: it comprises a first tubular element (3) and a second tubular element (4) which are arranged opposite each other; it comprises a first plurality of longitudinal elements (5) which are carried by the first tubular element (3) and by the second tubular element (4); it comprises a second plurality of longitudinal elements (6) which are arranged to connect the first tubular element (3) and the second tubular element (4) to each other; it comprises: a first coupling element (13) which comprises a first seat (17), a second coupling element (14) which comprises a second seat (19), a third coupling element (15) which comprises a third seat (21), a fourth coupling element (16) which comprises a fourth seat (23), it comprises moving means (25) which are connected to the longitudinal elements of the first plurality of longitudinal elements (5) to move them in sliding motion with respect to the first tubular element (3) and to the second tubular element (4): moving away, so that they assume a first operational configuration (PC); moving closer, so that they assume a second operational configuration (SC).

The supporting structure (1) is configured so that, during use, when it is positioned above and resting on the frame (2) of the vehicle, the moving means (25) move the longitudinal elements (8, 9, 10, 11) to pass from the first operational configuration (PC) to the second operational configuration (SC) so that the terminals (18, 20, 22, 24) of frame (2) are received in the corresponding seat (17, 19, 21, 23) to couple with each other so as to determine the hooking between the supporting structure (1) and the frame (2) of the vehicle.

## Description

The present invention falls within the technical field relating to the support of road maintenance equipment for vehicles having a loading platform. In particular, the invention relates to a supporting structure of road maintenance equipment coupleable to the frame of a vehicle having a loading platform.

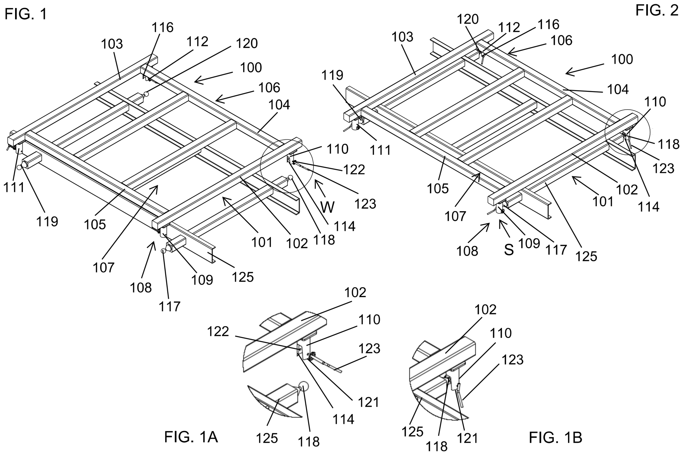

A supporting structure (100) of road maintenance equipment is known, comprising: a first plurality of longitudinal elements (101) comprising, in turn, a first longitudinal element (102) and a second longitudinal element (103) which are arranged opposite and parallel to each other, a third longitudinal element (104) and a fourth longitudinal element (105) which are arranged opposite and parallel to each other; a second plurality of longitudinal elements (106) which are arranged to connect to each other the longitudinal elements of the first plurality of longitudinal elements (101) so as to define, together with the latter, a support (107) for road maintenance equipment (see figs. 1 and 2).

Moreover, the supporting structure (100) comprises a plurality of coupling elements (108) which comprise: a first coupling element (109) which is carried by the first longitudinal element (102) so as to be arranged protruding with respect to the support (107); a second coupling element (110) which is carried by the first longitudinal element (102) so as to be arranged protruding with respect to the support (107); the first coupling element (109) and the second coupling element (110) are arranged opposite each other; a third coupling element (111) which is carried by the second longitudinal element (103) so as to be arranged protruding with respect to the support (107); a fourth coupling element (112) which is carried by the second longitudinal element (103) so as to be arranged protruding with respect to the support (107); the third coupling element (111) and the fourth coupling element (112) are arranged opposite each other (see figs. 1 and 2).

The first coupling element (109), the second coupling element (110), the third coupling element (111) and the fourth coupling element (112) comprise a respective first seat (not illustrated), second seat (114), third seat (not illustrated) and fourth seat (116), each shaped to receive a corresponding terminal (117, 118, 119, 120) of frame (125) of a vehicle having a loading platform (see figs. 1A and 1B).

Each first, second, third and fourth seat (114, 116) comprises an opening (121) which shapes an upside-down U and each coupling element (109, 110, 111, 112) comprises a pair of through holes (122), which are aligned with each other and which are shaped to be crossed by locking means (123) to lock the terminal (117, 118, 119, 120) of frame (125) in the corresponding seat (113, 114, 115, 116) (see figs. 1A and 1B).

During use, when the supporting structure (100) is arranged above and resting on the frame (125) of the vehicle, the first coupling element (109), the second coupling element (110), the third coupling element (111) and the fourth coupling element (112) are arranged so as to face the corresponding terminals (117, 118, 119, 120) of frame (125) to be received so that, once the terminal (117, 118, 119, 120) of frame (125) has been received in the corresponding seat (114, 116) and the locking means (123) have been arranged, the coupling elements (109, 110, 111, 112) and the terminals (117, 118, 119, 120) of frame (125) are coupled to each other ensuring the hooking between the supporting structure (100) and the frame (125) of the vehicle (see figs. 2 and 1B). In figure 1 and in figure 2 the known supporting structure (100) and the frame (2) of a vehicle having a loading platform are illustrated when there occurs the condition therebetween, respectively, of non-hooking and of hooking. In figure 1A, the detail W of figure 1 is illustrated, that is to say the condition in which the supporting structure (100) is arranged above the frame (125) of the vehicle and the second seat (114) faces the terminal (118) of frame (125) that it will have to receive; whereas, in figure 1B, the detail S of figure 2 is illustrated, that is to say the condition in which the supporting structure (100) is arranged above and resting on the frame (125) of the vehicle and the second seat (114) receives the corresponding terminal (118) of frame (125).

In figures 1A and 1B the second seat (114) and the corresponding terminal (118) of frame (125) are illustrated but similar considerations apply to the first seat, the third seat and the fourth seat (116) and the corresponding terminals (117, 119, 120) of frame (125).

Therefore, during the positioning of the supporting structure (100) on the loading platform of the vehicle, the operator assigned to such positioning will have to proceed carefully and make sure of the insertion of the terminals (117, 118, 119, 120) of frame (125) in the corresponding seats (114, 116) of the coupling elements (109, 110, 111, 112).

This requires time and skilled operators.

Moreover, the same operator or, in some situations, also a further operator, will also have to provide for the arrangement of the locking means (123), manually, so as to lock each terminal (117, 118, 119, 120) of frame (125) in the corresponding seat (114, 116) and ensure a stable hooking between the supporting structure (100) and the frame (125) of the vehicle.

This requires additional time, with respect to that employed for positioning the supporting structure (100) on the loading platform and, therefore, on the frame (125), to complete the hooking between the supporting structure (100) and the frame (125) of the vehicle.

In light of the above, the aim of the present invention consists in limiting the drawbacks reported above.

Another aim of the present invention consists in providing a supporting structure of road maintenance equipment coupleable, rapidly and automatically, to the frame of a vehicle having a loading platform, ensuring a reduction in working times and operators.

The aforesaid aims are achieved by means of a supporting structure of road maintenance equipment coupleable to the frame of a vehicle having a loading platform in accordance with claim 1.

Advantageously, the moving means ensure the passage from the first operational configuration to the second operational configuration of the first longitudinal element, of the second longitudinal element, of the third longitudinal element and of the fourth longitudinal element, once the supporting structure has been positioned above and resting on the frame of the vehicle, so that each seat is brought closer to the corresponding terminal of frame to receive it, thus determining the relative coupling.

In other words, the moving means move the longitudinal elements of the first plurality of longitudinal elements in sliding motion and approaching the first tubular element and the second tubular element ensuring the coupling between each terminal of frame and the corresponding seat, without having to resort to the presence of an operator.

It follows a simple and rapid hooking between the supporting structure and the frame of the vehicle, made possible by the sliding movement of the longitudinal elements of the first plurality of longitudinal elements which carry the coupling elements.

Further, the coupling between the terminals of frame and the seats, determined by the moving means, guarantees a stable hooking between the supporting structure and the frame of the vehicle.

Specific embodiments of the invention will be described in the following of the present discussion, in accordance with what is reported in the claims and with the aid of the attached drawings, in which:
- figure 1 and figure 2 are perspective views of the known supporting structure of road maintenance equipment, when arranged above the frame of a vehicle having a loading platform and with the coupling elements and the terminals of frame, respectively, decoupled and coupled with each other;
- figure 1A is a view of the detail W of figure 1;
- figure 1B is a view of the detail S of figure 2;
- figure 3 is a perspective view of the supporting structure of road maintenance equipment coupleable to the frame of a vehicle having a loading platform, which is the subject of the present invention, and of said frame;
- figure 4 is a perspective view of the supporting structure of road maintenance equipment of figure 3, when the first, the second, the third and the fourth longitudinal element assume the first operational configuration;
- figure 5 is a cross-sectional view of a portion of figure 4;
- figure 6 is a side view of figure 4;
- figure 7 is a perspective view of the supporting structure of road maintenance equipment of figure 3, when the first, the second, the third and the fourth longitudinal element assume the second operational configuration;
- figure 8 is a cross-sectional view of a portion of figure 7;
- figure 9 is a side view of figure 7;

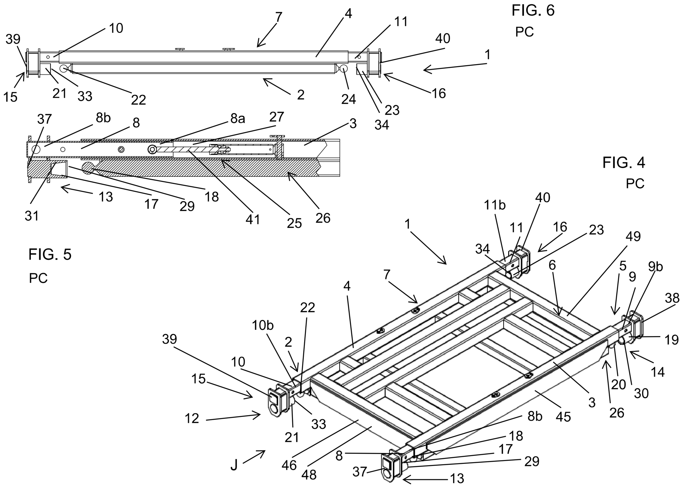

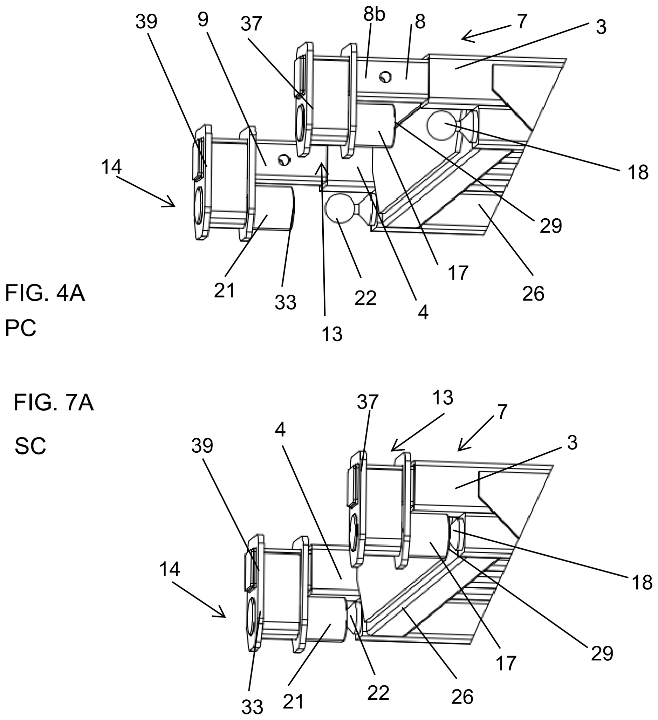

- figure 4A is a view of the detail J of figure 4;

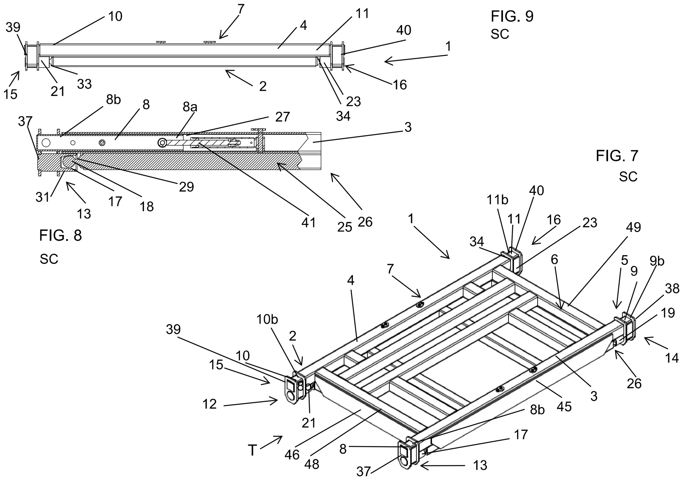

- figure 7A is a view of the detail T of figure 7;

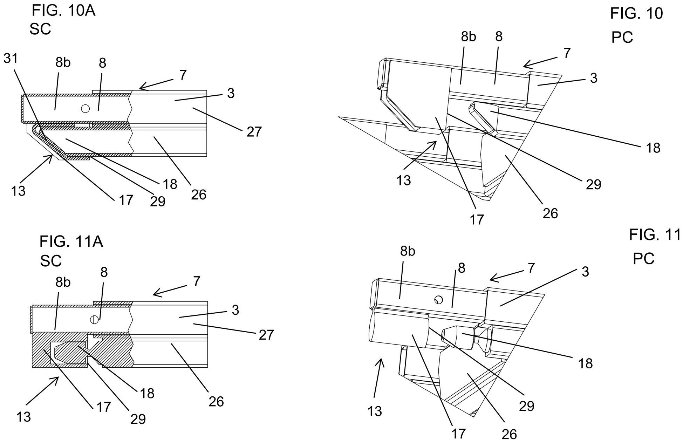

- figures 10 and 11 are views analogous to those of figure 4A, in accordance with further embodiments;
- figures 10A and 11A are cross-sectional views of figures, respectively, 10 and 11, when the first, the second, the third and the fourth longitudinal element assume the second operational configuration;

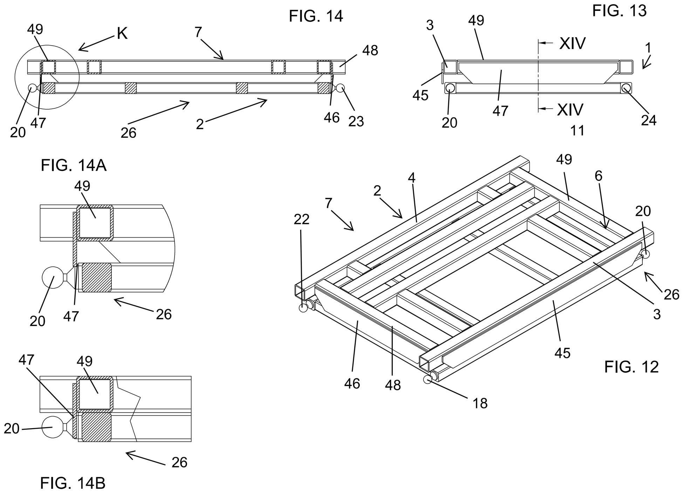

- figures 12 and 13 are views, respectively, perspective and side, of the supporting structure of road maintenance equipment, which is the subject of the present invention, in which some components have been removed for better visualization of others;
- figure 14 is a sectional view of figure 13, taken along section XIV-XIV;
- figure 14A is a view of the detail K of figure 14, according to a first phase of use;
- figure 14B is a view analogous to figure 14A, according to a second phase of use.

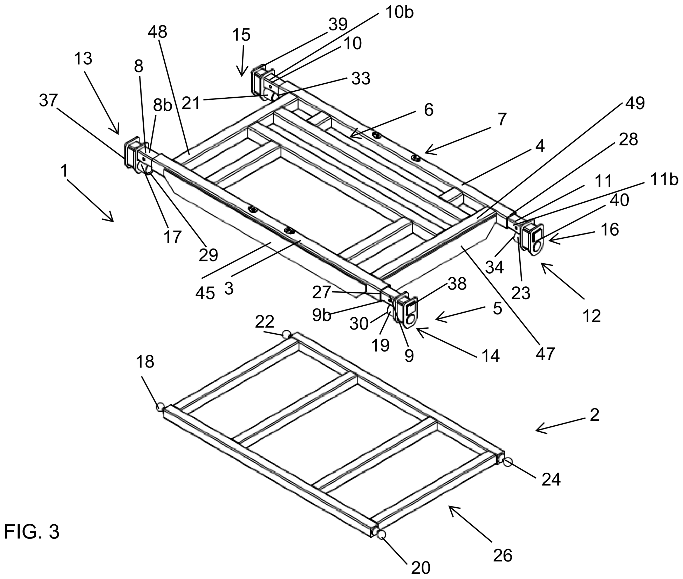

With reference to the attached drawing sheets, the general reference (1) indicates a supporting structure of road maintenance equipment coupleable to the frame (2) of a vehicle having a loading platform, which is the subject of the present invention, which comprises: a first tubular element (3) and a second tubular element (4) which are arranged opposite each other; a first plurality of longitudinal elements (5) which are carried by the first tubular element (3) and by the second tubular element (4); a second plurality of longitudinal elements (6) which are arranged to connect the first tubular element (3) and the second tubular element (4) to each other so as to define, together with the first tubular element (3) and the second tubular element (4), a support (7) for road maintenance equipment (see figs. 3, 4, 6, 7 and 9). The first plurality of longitudinal elements (5) comprises: a first longitudinal element (8) and a second longitudinal element (9), which are telescopically coupled to the first tubular element (3) so that the first longitudinal element (8) and the second longitudinal element (9) slide with respect to the first tubular element (3); a third longitudinal element (10) and a fourth longitudinal element (11), which are telescopically coupled to the second tubular element (4) so that the third longitudinal element (10) and the fourth longitudinal element (11) slide with respect to the second tubular element (4); with the first longitudinal element (8) and the second longitudinal element (9) arranged opposite each other and with the third longitudinal element (10) and the fourth longitudinal element (11) arranged opposite each other (see figs. 3, 4, 6, 7 and 9). Further, the supporting structure (1) comprises a plurality of coupling elements (12) which comprises: a first coupling element (13) which is carried by the first longitudinal element (8) so as to be arranged protruding with respect to the support (7); a second coupling element (14) which is carried by the second longitudinal element (9) so as to be arranged protruding with respect to the support (7); a third coupling element (15) which is carried by the third longitudinal element (10) so as to be arranged protruding with respect to the support (7); a fourth coupling element (16) which is carried by the fourth longitudinal element (11) so as to be arranged protruding with respect to the support (7); with: the first coupling element (13) which comprises a first seat (17) shaped to receive a first terminal (18) of frame (2) of a vehicle having a loading platform; the second coupling element (14) which comprises a second seat (19) shaped to receive a second terminal (20) of frame (2) of the vehicle having a loading platform; the third coupling element (15) which comprises a third seat (21) shaped to receive a third terminal (22) of frame (2) of the vehicle having a loading platform; the fourth coupling element (16) which comprises a fourth seat (23) shaped to receive a fourth terminal (24) of frame (2) of the vehicle having a loading platform (see figs. 3, 4, 6, 7 and 9).

The supporting structure (1), moreover, comprises moving means (25) which are carried by the first tubular element (3) and by the second tubular element (4), which are connected to the longitudinal elements of the first plurality of longitudinal elements (5) to move them in sliding motion with respect to the first tubular element (3) and to the second tubular element (4); the moving means (25) are arranged so as to: move away, with respect to the first tubular element (3) and to the second tubular element (4), the first longitudinal element (8), the second longitudinal element (9), the third longitudinal element (10) and the fourth longitudinal element (11) so that they assume a first operational configuration (PC); move closer, with respect to the first tubular element (3) and to the second tubular element (4), the first longitudinal element (8), the second longitudinal element (9), the third longitudinal element (10) and the fourth longitudinal element (11) so that they assume a second operational configuration (SC) (see figs. 3, 4, 6, 7 and 9).

The supporting structure (1) is configured so that, during use, when it is positioned above and resting on the frame (2) of the vehicle, the moving means (25) move the first longitudinal element (8), the second longitudinal element (9), the third longitudinal element (10) and the fourth longitudinal element (11) to pass from the first operational configuration (PC) to the second operational configuration (SC) so that the first terminal (18) of frame (2), the second terminal (20) of frame (2), the third terminal (22) of frame (2) and the fourth terminal (24) of frame (2) of the vehicle are received in the corresponding first seat (17), second seat (19), third seat (21) and fourth seat (23) so as to couple with each other to determine the hooking between the supporting structure (1) and the frame (2) of the vehicle (see figs. 3, 4 and 7).

By road maintenance equipment one can mean a straddle brush cutter machine or a shredding machine, for example.

Generally, the frame (2) of a vehicle having a loading platform may comprise a reticular structure (26) (see fig. 3).

The supporting structure (1), which is the subject of the present invention, can be coupled to such reticular structure (26) (see figs. 3, 4 and 7).

Such reticular structure (26) can carry the first terminal (18) of frame (2), the second terminal (20) of frame (2), the third terminal (22) of frame (2) and the fourth terminal (24) of frame (2) (see figs. 3, 4 and 7).

In figures 3, 4 and 7 the supporting structure (1), which is the subject of the present invention, and the reticular structure (26) of the frame (2) of the vehicle are illustrated.

In the present discussion, by vehicle one can mean a vehicle driven by its own engine and configured to transport and move road maintenance equipment.

Preferably, the vehicle is a motor vehicle.

In such a case, by loading platform one can mean the rear plane of the motor vehicle on which a load is arranged.

Alternatively, the vehicle can be a vehicle without its own engine and configured to be towed: for example, a trailer.

The first tubular element (3) and the second tubular element (4) can be arranged opposite and parallel to each other (see figs. 4 and 7).

The support (7) can shape a resting plane (see figs. 4 and 7). In other words, the supporting structure (26) can comprise said resting plane.

It follows that the road maintenance equipment can be received resting on said resting plane, during use (see figs. 6 and 9).

The first plurality of longitudinal elements (5) can comprise only the first longitudinal element (8), the second longitudinal element (9), the third longitudinal element (10) and the fourth longitudinal element (11).

The first tubular element (3) can comprise a first hollow portion (27) (see figs. 5 and 8).

Similarly, the second tubular element (4) can comprise a second hollow portion (28).

The first longitudinal element (8) and the second longitudinal element (9) can be telescopically coupled to the first tubular element (3) so that they slide inside the latter (see figs. 5 and 8).

The third longitudinal element (10) and the fourth longitudinal element (11) can be telescopically coupled to the second tubular element (4) so that they slide inside the latter.

In other words, the first longitudinal element (8) and the second longitudinal element (9) can slide in the first hollow portion (27) (see figs. 5 and 8).

The third longitudinal element (10) and the fourth longitudinal element (11) can slide in the second hollow portion (28).

The first longitudinal element (8) and the second longitudinal element (9) can be arranged, at least partially, inside the first hollow portion (27) (see figs. 5 and 8).

Similarly, the third longitudinal element (10) and the fourth longitudinal element (11) can be arranged, at least partially, inside the second hollow portion (28).

The moving means (25) can be arranged to move in sliding motion: the first longitudinal element (8) and the second longitudinal element (9), along the first tubular element (3), so as to bring them closer to and/or away from the latter; the third longitudinal element (10) and the fourth longitudinal element (11), along the second tubular element (4), so as to bring them closer to and/or away from the latter.

In detail, during use, the first tubular element (3) and the second tubular element (4) are arranged resting on the frame (2) of the vehicle (see figs. 6 and 9).

In other words, during use, the first tubular element (3) and the second tubular element (4) can contact the reticular structure (26) of the frame (2) of the vehicle (see figs. 6 and 9).

Moreover, during use, the support (7) and the frame (2) can extend parallel to each other (see figs. 6 and 9).

The first longitudinal element (8), the second longitudinal element (9), the third longitudinal element (10) and the fourth longitudinal element (11), in the passage from the first operational configuration (PC) to the second operational configuration (SC), when the supporting structure (1) is arranged above and resting on the frame (2), can be moved closer to the terminals (18, 20, 22, 24) of frame (2) of the loading platform so that each seat (17, 19, 21, 23) can receive a corresponding terminal (18, 20, 22, 24) of frame (2) (see figs. 4A and 7A). The first terminal (18) of frame (2), the second terminal (20) of frame (2), the third terminal (22) of frame (2) and the fourth terminal (24) of frame (2) can each shape spheres (see figs. 4A and 7A).

Preferably, the first seat (17) and the second seat (19) comprise a respective opening (29, 30) which faces the first tubular element (3) and a respective side wall (31) which is, at least partially, inclined; the third seat (21) and the fourth seat (23) comprise a respective opening (33, 34) which faces the second tubular element (4) and a respective side wall which is, at least partially, inclined (see figs. 5, 9, 4A and 7A).

Advantageously, the inclined side wall (31) facilitates the insertion of the terminal (18, 20, 22, 24) of frame (2) in the corresponding seat (17, 19, 21, 23) and, therefore, the correct hooking of the supporting structure (1) to the frame (2) of the vehicle.

Should the initial positioning of the supporting structure (1) on the frame (2) be such as to determine a misalignment between the terminal (18, 20, 22, 24) of frame (2) and the corresponding seat (17, 19, 21, 23), during the relative coupling, the side wall (31) helps to reduce such misalignment. The respective side wall (31) of the first seat (17) and of the second seat (19) can be inclined towards the inside of the supporting structure (1) (see figs. 4, 7, 5, 9, 4A and 7A).

Similarly, the respective side wall of the third seat (21) and of the fourth seat (23) can be inclined towards the inside of the supporting structure (1) (not illustrated but see figs. 4, 7, 5, 9, 4A and 7A with reference to the respective side wall (31) of the first seat (17)).

The first seat (17) can form a truncated cone (see figs. 5 and 9). Similarly, the second seat (19) can form a truncated cone (see figs. 4 and 7). The third seat (21) can form a truncated cone (see figs. 4 and 7). Similarly, the fourth seat (23) can form a truncated cone (see figs. 4 and 7). In detail, with reference to the first longitudinal element (8) and the first seat (17), the axis of longitudinal extension of the first longitudinal element (8) and the height of the truncated cone shaped by the first seat (17) can be parallel to each other (see figs. 4A and 7A).

Similar considerations can also be made for the second longitudinal element (9) and the second seat (19), for the third longitudinal element (10) and the third seat (21) and for the fourth longitudinal element (11) and the fourth seat (23) (see figs. 4 and 7).

Preferably, the first longitudinal element (8) carries the first coupling element (13) so that the first seat (17) is arranged below the support (7) and, during use, faces the first terminal (18) of frame (2); the second longitudinal element (9) carries the second coupling element (14) so that the second seat (19) is arranged below the support (7) and, during use, faces the second terminal (20) of frame (2); the third longitudinal element (10) carries the third coupling element (15) so that the third seat (21) is arranged below the support (7) and, during use, faces the third terminal (22) of frame (2); the fourth longitudinal element (11) carries the fourth coupling element (16) so that the fourth seat (23) is arranged below the support plane (7) and, during use, faces the fourth terminal (24) of frame (2) (see figs. 4 and 7).

Advantageously, the movement of the first longitudinal element (8), of the second longitudinal element (9), of the third longitudinal element (10) and of the fourth longitudinal element (11), to pass from the first operational configuration (PC) to the second operational configuration (SC), ensures the insertion of the first terminal (18) of frame (2), of the second terminal (20) of frame (2), of the third terminal (22) of frame (2) and of the fourth terminal (24) of frame (2) into, respectively, the first seat (17), second seat (19), third seat (21) and fourth seat (23).

In other words: the first longitudinal element (8) can carry the first coupling element (13) so that the first seat (17) is arranged below the first tubular element (3); the second longitudinal element (9) can carry the second coupling element (14) so that the second seat (19) is arranged below the first tubular element (3); the third longitudinal element (10) can carry the third coupling element (15) so that the third seat (21) is arranged below the second tubular element (4); the fourth longitudinal element (11) can carry the fourth coupling element (16) so that the fourth seat (23) is arranged below the second tubular element (4). The first coupling element (13) can comprise a first connecting plate (37) to connect to each other the first longitudinal element (8) and the first seat (17) (see figs. 4, 4A, 7 and 7A).

The second longitudinal element (9) can comprise a second connecting plate (38) to connect to each other the second longitudinal element (9) and the second seat (19) (see figs. 4 and 7).

The third longitudinal element (10) can comprise a third connecting plate (39) to connect to each other the third longitudinal element (10) and the third seat (21) (see figs. 4, 4A, 7 and 7A).

The fourth longitudinal element (11) can comprise a fourth connecting plate (40) to connect to each other the fourth longitudinal element (11) and the fourth seat (23) (see figs. 4 and 7).

During use, the first seat (17), the second seat (19), the third seat (21) and the fourth seat (23) can face, with the respective opening (29, 30, 33, 34), the corresponding first terminal (18) of frame (2), second terminal (20) of frame (2), third terminal (22) of frame (2) and fourth terminal (24) of frame (2). Preferably, the moving means (25) comprise: a first piston (41) and a second piston (not illustrated) which are arranged inside the first tubular element (3), the first piston (41) being connected to the first longitudinal element (8) and the second piston being connected to the second longitudinal element (9); a third piston and a fourth piston (not illustrated) which are arranged inside the second tubular element (4), the third piston being connected to the third longitudinal element (10) and the fourth piston being connected to the fourth longitudinal element (11) (see figs. 4, 5, 7 and 8).

Advantageously, the supporting structure (1) which is the subject of the present invention is compact and of limited bulk, ensuring that it can be contained within the bulk of the loading platform of a vehicle.

In figure 5 and in figure 8 part of the first tubular element (3), the first longitudinal element (8), the first coupling element (13) and the first piston (41) are illustrated in cross-section.

The first piston (41) and the second piston can be arranged inside the first tubular element (3).

In other words, the first piston (41) and the second piston can be arranged in the first hollow portion (27).

The third piston and the fourth piston can be arranged inside the second tubular element (4).

In other words, the third piston and the fourth piston can be arranged in the second hollow portion (28).

The first piston (41) and the second piston can be arranged opposite each other. The third piston and the fourth piston can be arranged opposite each other. The first piston (41) and the first tubular element (3) can be fixed to each other. The second piston and the first tubular element (3) can be fixed to each other. The third piston and the second tubular element (4) can be fixed to each other. The fourth piston and the second tubular element (4) can be fixed to each other. In the attached figures only the first piston (41) is illustrated, namely in figures 5 and 8.

The second piston, the third piston and the fourth piston are not illustrated but would be presented in the same illustration as the first piston (41).

In figure 4 a first phase of use of the supporting structure (1) of road maintenance equipment is illustrated, in which the latter is arranged above and resting on the frame (2) of a vehicle having a loading platform and the first longitudinal element (8), the second longitudinal element (9), the third longitudinal element (10) and the fourth longitudinal element (11) assume the first operational configuration (PC).

In detail, the first terminal (18) of frame (2), the second terminal (20) of frame (2), the third terminal (22) of frame (2) and the fourth terminal (24) of frame (2) and the first seat (17), the second seat (19), the third seat (21) and the fourth seat (23) are decoupled from each other (see fig. 4A). In fig. 4A the first seat (17) and the first terminal (18) of frame (2) and the third seat (21) and the third terminal (22) of frame (2) are illustrated spaced apart from each other.

In such a condition, also the second seat (19), the third seat (21) and the fourth seat (23) and the corresponding terminal (20, 22, 24) of frame (2) are spaced apart from each other.

In figure 7 a second phase of use of the supporting structure (1) of road maintenance equipment is illustrated, in which the latter is arranged above and resting on the frame (2) of a vehicle having a loading platform and the first longitudinal element (8), the second longitudinal element (9), the third longitudinal element (10) and the fourth longitudinal element (11) assume the second operational configuration (SC).

In detail, the first terminal (18) of frame (2), the second terminal (20) of frame (2), the third terminal (22) of frame (2) and the fourth terminal (24) of frame (2) and the first seat (17), the second seat (19), the third seat (21) and the fourth seat (23) are coupled to each other (see fig. 7A). In fig. 7A the first terminal (18) of frame (2) which is received inside the first seat (17) and the third terminal (22) of frame (2) which is received inside the third seat (21) are illustrated.

In such a condition, also the other terminals (20, 22, 24) of frame (2) are received inside the corresponding second seat (19), third seat (21) and fourth seat (23).

The first longitudinal element (8) can comprise a first end (8a) and a second end (8b) which are arranged opposite each other; the second longitudinal element (9) can comprise a third end and a fourth end (9b) which are arranged opposite each other; the third longitudinal element (10) can comprise a fifth end and a sixth end (10b) which are arranged opposite each other; and the fourth longitudinal element (11) can comprise a seventh end and an eighth end (11b) which are arranged opposite each other (see figs. 4, 5, 7 and 8). The first longitudinal element (8) and the second longitudinal element (9) can be carried by the first tubular element (3) so that the first end (8a) and the third end are arranged inside the first tubular element (3) and so that the second end (8b) and the fourth end (9b) are arranged protruding with respect to the first tubular element (3); whereas, the third longitudinal element (10) and the fourth longitudinal element (11) can be carried by the second tubular element (4) so that the fifth end and the seventh end are arranged inside the second tubular element (4) and so that the sixth end (10b) and the eighth end (11b) are arranged protruding with respect to the second tubular element (4) (see figs. 4, 5, 7 and 8).

The third end, the fifth end and the seventh end have not been illustrated since inside the first tubular element (3) and the second tubular element (4). Moreover: the second end (8b) of the first longitudinal element (8) and the first coupling element (13) can be connected to each other; the fourth end (9b) of the second longitudinal element (9) and the second coupling element (14) can be connected to each other; the sixth end (10b) of the third longitudinal element (10) and the third coupling element (15) can be connected to each other; the eighth end (11b) of the fourth longitudinal element (11) and the fourth coupling element (16) can be connected to each other (see figs. 4, 5, 7 and 8). The first piston (41) and the second piston can be arranged in the first hollow portion (27) (only the first piston (41) illustrated). The third piston and the fourth piston can be arranged in the second hollow portion (28) (not illustrated).

In accordance with a preferred embodiment, illustrated in the attached figures, the first piston (41) and the first end (8a) of the first longitudinal element (8) can be in connection with each other; the second piston and the third end of the second longitudinal element (9) can be in connection with each other; the third piston and the fifth end of the third longitudinal element (10) can be in connection with each other; and the fourth piston and the seventh end of the fourth longitudinal element (11) can be in connection with each other (see figs. 5, 9, 4A and 7A).

In this way, the first piston (41) and the second piston can move in sliding motion, respectively, the first longitudinal element (8) and the second longitudinal element (9) with respect to the first tubular element (3), pushing against the first longitudinal element (8) and the second longitudinal element (9) at, respectively, the first end (8a) and the third end; whereas, the third piston and the fourth piston can move in sliding motion, respectively, the third longitudinal element (10) and the fourth longitudinal element (11) with respect to the second tubular element (4), pushing against the third longitudinal element (10) and the fourth longitudinal element (11) at the fifth end and the seventh end.

By way of example, the first piston (41), the second piston, the third piston and the fourth piston can be hydraulic pistons.

Preferably, the side wall (31) of the first seat (17), of the second seat (19), of the third seat (21) and of the fourth seat (23) forms a truncated cone. In detail, the side wall (31) of a seat (17, 19, 21, 23) can form a truncated cone, the height of which extends along an axis which is parallel to the longitudinal axis of the longitudinal element (8, 9, 10, 11) which carries the coupling element (13, 14, 15, 16) comprising said seat (17, 19, 21, 23). Advantageously, since the terminals (18, 20, 22, 24) of frame (2), in most cases, form a sphere, the truncated-cone shape of the seats (17, 19, 21, 23) facilitates the insertion of the terminal (18, 20, 22, 24) of frame (2) in the corresponding seat (17, 19, 21,23).

With particular reference to the first seat (17) and to the corresponding first terminal (18) of frame (2) that it will have to receive, figure 10 and figure 11 illustrate two different further embodiments of the first seat (17) when, respectively, the first terminal (18) of frame (2) shapes a triangle or an element having a cylindrical portion and a truncated-cone portion. Analogously to what is illustrated for the first seat (17) in figure 10 and in figure 11, the second seat (19), the third seat (21) and the fourth seat (23) can assume the same shape.

With particular reference to figs. 12, 13 and 14, the supporting structure (1) can comprise a first abutment wall (45) which is carried by the first tubular element (3), which extends from the first tubular element (3) so as to protrude with respect to the latter.

In detail, the first abutment wall (45) can extend from the first tubular element (3) so as to protrude, with respect to the latter, downwards. Generally, during the phase of positioning the supporting structure (1) on the frame (2) of the vehicle, the supporting structure (1) is positioned, initially, on a support to space it from the ground.

In this way, the vehicle having a loading platform can insert itself with the frame (2) under the supporting structure (1), that is to say between the ground and the supporting structure (1) itself. Moreover, such insertion, in most cases, takes place with the motor vehicle reversing.

Therefore, during such manoeuvre, the abutment wall (45) ensures that the supporting structure (1) and the frame (2) are positioned so that there is a given correspondence between the coupling elements (13, 14, 15, 16) and the terminals (18, 20, 22, 24) of frame (2): in fact, the vehicle reverses until the rod carrying the first terminal (18) of frame (2) and the second terminal (20) of frame (2) contacts the first abutment wall (45).

Further, and still with reference to figs. 12, 13 and 14, the supporting structure (1) can comprise a pair of abutment walls (46, 47); the second plurality of longitudinal elements (6) comprises a first end longitudinal element (48) and a second end longitudinal element (49) which are arranged opposite each other; each wall of the pair of abutment walls (46, 47) is carried by, respectively, the first end longitudinal element (48) and the second end longitudinal element (49) and extends from, respectively, the first end longitudinal element (48) and the second end longitudinal element (49) so as to protrude with respect to the latter. In detail, the abutment walls of the pair of abutment walls (46, 47) can extend from the first end longitudinal element (48) and the second end longitudinal element (49) so as to protrude, with respect to the latter, downwards. Advantageously, the pair of abutment walls (46, 47) guarantees the correct positioning between the supporting structure (1) and the frame (2) of the vehicle during the phase of positioning the supporting structure (1) with respect to the latter as described above.

In detail, during the manoeuvre described above, the pair of abutment walls (46, 47) ensures that the supporting structure (1) and the frame (2) are positioned so that there is a given correspondence between the coupling elements (13, 14, 15, 16) and the terminals (18, 20, 22, 24) of frame (2): in fact, the vehicle reverses inserting itself with the reticular structure (26) between the abutment walls of the pair of abutment walls (46, 47).

It is specified that the embodiment illustrated in figures 12, 13 and 14 is the same as figure 4 but the coupling elements (13, 14, 15, 16) have been removed for better visualization of the first abutment wall (45) and of the pair of abutment walls (46, 47).

The first end longitudinal element (48), the second end longitudinal element (49), together with the first tubular element (3) and the second tubular element (4), outline the perimeter of the support (7).

The first abutment wall (45) can extend along the axis of extension of the first tubular element (3).

The abutment walls of the pair of abutment walls (46, 47) can extend, respectively, along the axis of extension of the first end longitudinal element (48) and of the second end longitudinal element (49).

With particular reference to figs. 14A and 14B, detail views of the centring phase of the supporting structure (1) on the frame (2) are illustrated, seen at one of the walls of the pair of abutment walls (46, 47) and of the first end longitudinal element (48): in fact, after having positioned the supporting structure (1) and the frame (2) so that there is reciprocal correspondence between the first coupling element (13), the second coupling element (14), the third coupling element (15), the fourth coupling element (16) and the first seat (17), the second seat (19), the third seat (21) and the fourth seat (23), the supporting structure (1) is positioned resting on the frame (2) so that each of the pair of abutment walls (46, 47) contacts the first end longitudinal element (48) and the second end longitudinal element (49) so that it is centred with respect to the reticular structure (26).

## Claims

1. Supporting structure (1) of road maintenance equipment coupleable to the frame (2) of a vehicle having a loading platform, wherein:
it comprises a first tubular element (3) and a second tubular element (4) arranged opposite each other;
it comprises a first plurality of longitudinal elements (5) carried by the first tubular element (3) and the second tubular element (4);
it comprises a second plurality of longitudinal elements (6) arranged to connect the first tubular element (3) and the second tubular element (4) to define, together with the first tubular element (3) and the second tubular element (4), a support (7) for road maintenance equipment;
the first plurality of longitudinal elements (5) comprises a first longitudinal element (8) and a second longitudinal element (9), telescopically coupled to the first tubular element (3) so that the first longitudinal element (8) and the second longitudinal element (9) slide relative to the first tubular element (3);
the first plurality of longitudinal elements (5) comprises a third longitudinal element (10) and a fourth longitudinal element (11), telescopically coupled to the second tubular element (4) so that the third longitudinal element (10) and the fourth longitudinal element (11) slide relative to the second tubular element (4);
the first longitudinal element (8) and the second longitudinal element (9) are arranged opposite each other;
the third longitudinal element (10) and the fourth longitudinal element (11) are arranged opposite each other;
it comprises a plurality of coupling elements (12) comprising:
a first coupling element (13) carried by the first longitudinal element (8) so as to arrange protruding from the support (7);
a second coupling element (14) carried by the second longitudinal element (9) so as to arrange protruding from the support (7);
a third coupling element (15) carried by the third longitudinal element (10) so as to arrange protruding from the support (7);
a fourth coupling element (16) carried by the fourth longitudinal element (11) so as to arrange protruding from the support (7);
the first coupling element (13) comprises a first seat (17) configured to receive a first terminal (18) of the frame (2) of a vehicle having a loading platform;
the second coupling element (14) comprises a second seat (19) configured to receive a second terminal (20) of the frame (2) of the vehicle having a loading platform;
the third coupling element (15) comprises a third seat (21) configured to receive a third terminal (22) of the frame (2) of the vehicle having a loading platform;
the fourth coupling element (16) comprises a fourth seat (23) configured to receive a fourth terminal (24) of the frame (2) of the vehicle having a loading platform;
it comprises moving means (25) carried by the first tubular element (3) and the second tubular element (4), connected to the longitudinal elements of the first plurality of longitudinal elements (5) to move them in sliding motion relative to the first tubular element (3) and the second tubular element (4);
the moving means (25) are arranged to:
move the first longitudinal element (8), the second longitudinal element (9), the third longitudinal element (10), and the fourth longitudinal element (11) away from the first tubular element (3) and the second tubular element (4) so that the first longitudinal element (8), the second longitudinal element (9), the third longitudinal element (10) and the fourth longitudinal element (11) assume a first operational configuration (PC);
move the first longitudinal element (8), the second longitudinal element (9), the third longitudinal element (10), and the fourth longitudinal element (11) towards the first tubular element (3) and the second tubular element (4) so that first longitudinal element (8), the second longitudinal element (9), the third longitudinal element (10) and the fourth longitudinal element (11) assume a second operational configuration (SC);
the supporting structure (1) is configured such that, during use, when it is positioned above and resting on the frame (2) of the vehicle, the moving means (25) move the first longitudinal element (8), the second longitudinal element (9), the third longitudinal element (10), and the fourth longitudinal element (11) from the first operational configuration (PC) to the second operational configuration (SC) so that the first terminal (18) of the frame (2), the second terminal (20) of the frame (2), the third terminal (22) of the frame (2), and the fourth terminal (24) of the frame (2) of the vehicle are received in the corresponding first seat (17), second seat (19), third seat (21), and fourth seat (23) to couple with each other, thereby creating a coupling hook up between the supporting structure (1) and the frame (2) of the vehicle.

2. Supporting structure (1) of road maintenance equipment according to the previous claim, wherein:
the first seat (17) and the second seat (19) comprise respective openings (29, 30) facing the first tubular element (3) and a respective side wall (31) that is at least partially inclined;
the third seat (21) and the fourth seat (23) comprise a respective opening (33, 34) facing the second tubular element (4) and a respective side wall that is at least partially inclined.

3. Supporting structure (1) of road maintenance equipment according to any of the preceding claims, wherein:
the first longitudinal element (8) carries the first coupling element (13) so that the first seat (17) is disposed below the support (7) and, during use, faces the first terminal (18) of the frame (2);
the second longitudinal element (9) carries the second coupling element (14) so that the second seat (19) is disposed below the support (7) and, during use, faces the second terminal (20) of the frame (2);
the third longitudinal element (10) carries the third coupling element (15) so that the third seat (21) is disposed below the support (7) and, during use, faces the third terminal (22) of the frame (2);
the fourth longitudinal element (11) carries the fourth coupling element (16) so that the fourth seat (23) is disposed below the support (7) and, during use, faces the fourth terminal (24) of the frame (2).

4. Supporting structure (1) of road maintenance equipment according to any of the preceding claims, wherein the moving means (25) comprise:
a first piston (41) and a second piston disposed inside the first tubular element (3), with the first piston (41) connected to the first longitudinal element (8) and the second piston connected to the second longitudinal element (9);
a third piston and a fourth piston disposed inside the second tubular element (4), with the third piston connected to the third longitudinal element (10) and the fourth piston connected to the fourth longitudinal element (11).

5. Supporting structure (1) of road maintenance equipment according to any of the preceding claims, wherein:
the first longitudinal element (8) comprises a first end (8a) and a second end (8b) arranged opposite each other;
the second longitudinal element (9) comprises a third end and a fourth end (9b) arranged opposite each other;
the third longitudinal element (10) comprises a fifth end and a sixth end (10b) arranged opposite each other;
the fourth longitudinal element (11) comprises a seventh end and an eighth end (11b) arranged opposite each other;
the first longitudinal element (8) and the second longitudinal element (9) are carried by the first tubular element (3) so that the first end (8a) and the third end are positioned inside the first tubular element (3) and so that the second end (8b) and the fourth end (9b) protrude from the first tubular element (3);
the third longitudinal element (10) and the fourth longitudinal element (11) are carried by the second tubular element (4) so that the fifth end and the seventh end are disposed inside the second tubular element (4) and so that the sixth end (10b) and the eighth end (11b) protrude from the second tubular element (4).

6. Supporting structure (1) of road maintenance equipment according to the preceding claim when dependent on claim 4, wherein:
the first piston (41) and the first end (8a) of the first longitudinal element (8) are connected to each other;
the second piston and the third end of the second longitudinal element (9) are connected to each other;
the third piston and the fifth end of the third longitudinal element (10) are connected to each other;
the fourth piston and the seventh end of the fourth longitudinal element (11) are connected to each other.

7. Supporting structure (1) of road maintenance equipment according to any of the preceding claims, wherein:
the side wall (31) of the first seat (17), the second seat (19), the third seat (21), and the fourth seat (23) forms a truncated cone.

8. Supporting structure (1) of road maintenance equipment according to any of the preceding claims, wherein:
it comprises a first abutment wall (45) carried by the first tubular element (3), which extends from the first tubular element (3) so as to protrude from it.

9. Supporting structure (1) of road maintenance equipment according to the preceding claim, wherein:
it comprises a pair of abutment walls (46, 47);
the second plurality of longitudinal elements (6) comprises a first end longitudinal element (48) and a second end longitudinal element (49) arranged opposite each other;
each wall of the pair of abutment walls (46, 47) is carried by, respectively, the first end longitudinal element (48) and the second end longitudinal element (49) and extends from, respectively, the first end longitudinal element (48) and the second end longitudinal element (49) so as to protrude from them.
